# EUROPÄISCHE PATENTANMELDUNG

(11) **EP 4 656 333 A1**
(43) Veröffentlichungstag der Anmeldung: **03.12.2025**
(21) Anmeldenummer: 25179278.4
(22) Anmeldetag: 28.05.2025
(51) Int. Cl.: B25J 9/00, B25J 19/00, B25J 15/04

(54) **DREHGELENKBAUGRUPPE FÜR EINEN ROBOTER**

(30) Priorität: 31.05.2024 DE 102024115271
(71) Anmelder: MULTIVAC Sepp Haggenmüller SE & Co. KG, 87787 Wolfertschwenden (DE)
(72) Erfinder: WINTERGERST, Bernd, 87749 Hawangen (DE); HÖRMANN, Johannes, 87730 Bad Grönenbach (DE)
(74) Vertreter: Grünecker Patent- und Rechtsanwälte PartG mbB

(57) **Zusammenfassung**

Eine Drehgelenkbaugruppe (2) für einen Roboter (1) umfasst einen Außenkörper (5) mit einem Hohlraum (25) sowie einen in dem Hohlraum (25) aufgenommenen Innenkörper (20), wobei der Innenkörper (20) um eine Achse (A) relativ zum Außenkörper (5) rotierbar ist. Die Drehgelenkbaugruppe (2) zeichnet sich dadurch aus, dass am Außenkörper (5) ein oder mehrere erste Fluidanschlüsse (13) vorhanden sind, dass am Außenkörper (5) eine Gelenkstruktur (6) zum Ankoppeln von einem oder mehreren Roboterarmen (3) vorhanden ist, dass der Innenkörper (20) eine Kupplung (11) zum Ankoppeln eines Greifers (10) aufweist, dass am Innenkörper (20) ein oder mehrere zweite Fluidanschlüsse (33) vorhanden sind, und dass jeder erste Fluidanschluss (13) über eine den Außenkörper (5) und/oder den Innenkörper (20) durchsetzende Fluidleitung (28) fluidverbunden ist mit einem zugeordneten zweiten Fluidanschluss (33) am Innenkörper (20).

## Beschreibung

Die vorliegende Erfindung betrifft eine Drehgelenkbaugruppe für einen Roboter sowie einen damit ausgerüsteten Roboter.

Aus der EP2529898A1 sind eine Vorrichtung und ein Verfahren zum lösbaren Befestigen eines Greifers an einem Roboter bekannt, insbesondere an einem sogenannten Delta-Roboter. Delta-Roboter sind Parallelarmroboter mit einer Stabkinetik. Die Basis des Delta-Roboters befindet sich oberhalb der sich bewegenden Teile. Von dort ragen drei Gelenkarme abwärts, von denen zumindest die unteren Teile jeweils als Parallelogramm ausgeführt sind, d.h. aus jeweils zwei Gelenkstäben mit typischerweise Kugelgelenken an ihren unteren Enden bestehen. An den Kugelgelenken sind die Gelenkstäbe gelenkig an einer Plattform befestigt, an der wiederum ein oder mehrere Roboterwerkzeuge angebunden sein können.

Die Aufgabe der vorliegenden Erfindung liegt darin, eine Drehgelenkbaugruppe für einen Roboter zu entwickeln, die in funktionaler Hinsicht optimiert ist. Diese Aufgabe wird gelöst durch eine Drehgelenkbaugruppe mit den Merkmalen des Anspruchs 1. Vorteilhafte Weiterbildungen der Erfindung sind in den abhängigen Ansprüchen angegeben.

Die erfindungsgemäße Drehgelenkbaugruppe für einen Roboter umfasst einen Außenkörper mit einem Hohlraum sowie einen zumindest abschnittsweise in dem Hohlraum aufgenommenen Innenkörper, wobei der Innenkörper um eine Achse relativ zum Außenkörper rotierbar ist. Erfindungsgemäß sind am Außenkörper ein oder mehrere erste Fluidanschlüsse vorhanden sowie eine Gelenkstruktur zum Ankoppeln von einem oder mehreren Roboterarmen. Der Innenkörper weist eine Kupplung zum Ankoppeln eines Greifers auf sowie ein oder mehrere zweite Fluidanschlüsse. Jeder erste Fluidanschluss ist über eine den Außenkörper und/oder den Innenkörper durchsetzende Fluidleitung fluidverbunden mit einem dem jeweiligen ersten Fluidanschluss zugeordneten zweiten Fluidanschluss am Innenkörper.

Mit diesen Eigenschaften ergeben sich diverse Vorteile für die Drehgelenkbaugruppe. Der Außenkörper ist einsetzbar in der Funktion einer Arbeitsplattform des Roboters, insbesondere eines Delta-Roboters. Der rotierbar im Außenkörper aufgenommene Innenkörper ermöglicht eine Drehdurchführung, d.h. die Übertragung von Drehmomenten durch den Außenkörper hindurch auf einen Greifer, der mittels der Kupplung an die Drehgelenkbaugruppe angeschlossen werden kann. Indem die Drehgelenkbaugruppe im Wesentlichen nur zwei Hauptkomponenten aufweist, nämlich den Außenkörper und den Innenkörper, kann sie besonders kompakt gebaut werden. Eine kompakte Bauweise wiederum ermöglicht ein besonders geringes Gewicht, sodass Verlagerungen der Drehgelenkbaugruppe im Roboter mit vergleichsweise geringen Kräften und entsprechend hohen Geschwindigkeiten möglich sind.

Der Innenkörper hat erfindungsgemäß sogar eine Dreifachfunktion: Er dient sowohl zum Ankoppeln eines Greifers, als auch zum Übertragen von Drehmoment durch den Außenkörper hindurch und schließlich zum Hindurchleiten eines oder gar mehrerer Fluide. Bei den Fluiden kann es sich z.B. um Luft (insb. beim Evakuieren), um Druckluft, ein Schutzgas und/oder um ein Reinigungsfluid handeln. Ein erster Fluidanschluss am Außenkörper kann ein Fluideinlassanschluss sein, z.B. zum Einleiten von Druckluft, Schutzgas oder Reinigungsfluid. Der ihm zugeordnete zweite Fluidanschluss wäre dann ein Fluidauslassanschluss. Zum Evakuieren kann umgekehrt ein zweiter Fluidanschluss am Innenkörper ein Fluideinlassanschluss sein; der ihm zugeordnete erste Fluidanschluss am Außenkörper wäre dann ein Fluidauslassanschluss.

Besondere Vorteile ergeben sich dadurch, dass eine oder mehrere Fluidleitungen durch den Außenkörper und/oder den Innenkörper hindurchführen. Diese Maßnahme macht Schlauchverbindungen überflüssig, die in herkömmlichen Delta-Robotern von der Außenseite des Außenkörpers an den Greifer führten. Der Wegfall solcher äußerer Schlauchverbindungen ermöglicht nicht nur ein schnelleres Ankoppeln oder Austauschen eines Greifers an der Drehgelenkbaugruppe, da diese Maßnahme nun ohne das Verbinden oder Lösen von Schlauchverbindungen erfolgen kann. Sondern darüber hinaus entfallen mit den Schlauchverbindungen auch Verschleißteile, die darüber hinaus häufig zu Kollisionen und dann einem ungewollten Verlagern von Produkten oder Werkstücken führten. Und schließlich führt der Wegfall von Schlauchverbindungen vom Außenkörper zum Greifer dazu, dass die Schlauchverbindungen nicht mehr das Ausmaß einer Drehung des Greifers beschränken können. Dank des Wegfalls von äußeren Schlauchverbindungen ermöglicht die erfindungsgemäße Drehgelenkbaugruppe prinzipiell sogar ein Drehen des Greifers relativ zum Außenkörper um einen unbegrenzt großen Drehwinkel.

Vorzugsweise ist der Außenkörper einstückig geformt. Auf diese Weise kann der Außenkörper besonders kompakt gebildet sein. Zudem kann sich durch die Einstückigkeit die Gefahr einer Materialermüdung verringern, und/oder die Einstückigkeit kann die Präzision der Bewegung der Drehgelenkbaugruppe erhöhen. Bspw. kann der Außenkörper aus einem Metall geformt sein. Analog könnte auch der Innenkörper im Wesentlichen einstückig geformt sein. Denkbar wäre es, den Außenkörper und/oder den Innenkörper im Wege eines 3D-Drucks herzustellen.

Der Außenkörper kann mindestens einen, vorzugsweise zwei oder drei, Flanschabschnitte aufweisen, wobei vorzugsweise an dem einen oder an jedem Flanschabschnitt zwei Gelenkstrukturen zum Ankoppeln jeweils einer Stange eines Roboterarms vorgesehen sind. Die Flanschabschnitte bieten den Vorteil, die Ankopplung der Roboterarme nach außen zu verlagern und so vergleichsweise große Hebelkräfte zu ermöglichen, während dennoch das Gewicht des Außenkörpers und damit der Drehgelenkbaugruppe vergleichsweise niedrig gehalten werden kann. Die Gelenkstrukturen können einstückig mit dem Flanschabschnitt ausgebildet sein. Vorzugsweise sind die Gelenkstrukturen jedoch am Flanschabschnitt montiert, d.h. als separate Bauteile gefertigt und nicht einstückig mit dem Flanschabschnitt ausgebildet.

Günstig ist es, wenn an dem Flanschabschnitt zwischen den zwei Gelenkstrukturen ein erster Fluidanschluss angeordnet ist, d.h. einer der ersten Fluidanschlüsse. Wenn der Außenkörper mehrere Flanschabschnitte aufweist, kann an mehreren oder gar an jedem Flanschabschnitt zwischen zwei Gelenkstrukturen ein erster Fluidanschluss vorgesehen sein. Diese Position für den ersten Fluidanschluss bietet den Vorteil, dass von dort nach außen führende Schlauchverbindungen nur noch eine minimale oder keine Gefahr haben, mit den benachbarten Roboterarmen zu kollidieren und/oder deren Bewegung im Betrieb der Drehgelenkbaugruppe zu behindern. Zudem ist die Position am Flanschabschnitt für das An- und Abkoppeln einer Schlauchverbindung besonders gut zugänglich.

Denkbar ist es, dass lediglich eine einzige Fluidleitung die Drehgelenkbaugruppe durchsetzt. Vorzugsweise sind jedoch am Außenkörper zwei, drei, vier, fünf oder bis zu sechs erste Fluidanschlüsse sowie jeweils zugeordnete Fluidleitungen durch die Drehgelenkbaugruppe vorgesehen. Dies bietet den Vorteil, für verschiedene Funktionen eines Werkzeugs am Baugreifer gleichzeitig oder abwechselnd verschiedene Fluide durch die Drehgelenkbaugruppe hindurchführen zu können, bspw. Luft (zum Evakuieren), Druckluft, ein Schutzgas oder Reinigungsfluid.

Am Innenkörper kann eine oder können auch mehrere exzentrisch zur Achse angeordnete Eingriffsstrukturen vorgesehen sein, die konfiguriert sind zum Eingriff mit Komplementärstrukturen am Greifer, wenn der Greifer an den Innenkörper angekoppelt ist. Eine Eingriffsstruktur kann als Vorsprung am Innenkörper ausgebildet sein. Die ihr zugeordnete Komplementärstruktur am Greifer kann als "Negativ" der Eingriffsstruktur ausgebildet sein, d.h. bspw. als Hohlraum, Loch oder Vertiefung. Denkbar wäre aber auch die umgekehrte Konfiguration, d.h., dass die Komplementärstruktur ein Vorsprung am Greifer und die Eingriffsstruktur das entsprechende "Negativ" dieser Komplementärstruktur am Innenkörper ist.

Vorzugsweise ist jede Komplementärstruktur in ihrem Querschnitt kongruent und etwa gleich groß zur Eingriffsstruktur. Gemeinsam bieten die Eingriffsstruktur(en) und die Komplementärstruktur(en) eine Möglichkeit zum Übertragen von Drehmomenten vom Innenkörper auf den Greifer. Da die Eingriffsstrukturen exzentrisch zur Achse angeordnet sind, ergeben sich vergleichbar große Hebelkräfte, die das Übertragen von Drehmoment begünstigen.

Vorzugsweise ist in mindestens einer Eingriffsstruktur ein zweiter Fluidanschluss vorgesehen. Damit erhält die Eingriffsstruktur eine Doppelfunktion: Sie dient zum einen zum Übertragen von Drehmoment zwischen Innenkörper und Greifer, zum anderen dient sie zum Herstellen einer Fluidverbindung zwischen Drehgelenkbaugruppe und angekoppeltem Greifer.

An der Eingriffsstruktur und/oder an der Komplementärstruktur kann eine Dichtung vorhanden sein, damit eine Fluidverbindung zwischen Drehgelenkbaugruppe und Greifer fluiddicht wird.

Zweckmäßig ist die am Innenkörper vorgesehene Kupplung zum Ankoppeln eines Greifers werkzeuglos bedienbar. Dies erleichtert und beschleunigt das An- oder Abkoppeln eines Greifers an der Drehgelenkbaugruppe. Bspw. kann die Kupplung zu diesem Zweck als Bajonettverschluss oder als Schnellverschluss ausgebildet sein.

Die Kupplung zum Ankoppeln eines Greifers kann ein in eine Verriegelungsposition vorgespanntes Verriegelungsglied aufweisen. Das Verriegelungsglied dient dazu, den Greifer in seiner an die Drehgelenkbaugruppe angekoppelten Position zu sichern, wenn sich das Verriegelungsglied in seiner Verriegelungsposition befindet. Die Vorspannung in die Verriegelungsposition bietet ein hohes Maß an Sicherheit dieser Verbindung.

Als Teil einer Fluidleitung kann eine Ringnut an einer Innenfläche des Hohlraums des Außenkörpers und/oder an einer Außenfläche des Innenkörpers vorgesehen sein. Die Ringnut erlaubt es, die Fluidverbindung über die Fluidleitung unbeeinträchtigt zu lassen durch eine Rotation von Außenkörper und Innenkörper relativ zueinander.

Die Ringnut kann sich abschnittsweise über die Innenfläche des Hohlraums oder die Außenfläche des Innenkörpers erstrecken. Vorzugsweise erstreckt sich die Ringnut jedoch über den gesamten Umfang der Innenfläche des Hohlraums oder der Außenfläche des Innenkörpers, sodass die Verbindung über die Fluidleitung vollkommen unabhängig wird von der relativen Drehposition von Außenkörper und Innenkörper zueinander. Zudem werden auf diese Weise Verdrehungen von Außen- und Innenkörper relativ zueinander um 360° oder mehr möglich.

Vorzugsweise weist der Innenkörper als (radialen) Teil einer Fluidleitung eine Einkerbung auf. Diese Einkerbung kann sich zur Außenfläche des Innenkörpers hin öffnen. Die Einkerbung kann z.B. in Form einer Kerbe ausgebildet sein, deren Höhe (in Axialrichtung des Innenkörpers) von innen nach außen zunimmt. Die Einkerbung kann jedoch auch als Einschnitt ausgebildet sein, die in Radialrichtung von innen nach außen im Wesentlichen eine konstante Höhe aufweist. Sowohl eine Kerbe mit einem (geringen) Öffnungswinkel als auch insbesondere ein Einschnitt mit konstanter Höhe bieten den Vorteil eines relativ geringen Platzverbrauchs in Axialrichtung des Innenkörpers. Dies wiederum ermöglicht es, in sehr kompakter Weise in Axialrichtung des Innenkörpers dichtgestaffelt verschiedene Fluidleitungen an die Außenfläche zu führen. Trotz des Vorhandenseins mehrerer Fluidleitungen kann der Innenkörper und mit ihm die gesamte Drehgelenkbaugruppe in Axialrichtung somit vergleichsweise kurz gehalten werden.

Herstellungstechnisch besonders einfach ist es, wenn die Einkerbung eine Innenkante aufweist, die sich entlang einer Sekante eines z.B. kreisförmigen Querschnitts des Innenkörpers erstreckt. Die Einkerbung kann für diese Form relativ einfach durch ein Säge- oder Schneidwerkzeug hergestellt werden. Denkbar wären jedoch auch andere Formen der Innenkante, bspw. eine V-förmige oder eine gebogene Form.

Im Innenkörper kann ein Abschnitt einer Fluidleitung parallel zur Achse des Innenkörpers verlaufen. Vorzugsweise ist ein solcher axialer Abschnitt einer Fluidleitung über einen radialen Abschnitt der Fluidleitung mit einer Außenfläche des Innenkörpers verbunden. Ein radialer Abschnitt der Fluidleitung kann bspw. als Bohrung ausgebildet sein.

In einem zweiten Aspekt bezieht sich die Erfindung auf einen Roboter mit einer Drehgelenkbaugruppe gemäß einer der vorstehend geschilderten Ausführungsformen, ferner umfassend mit der Drehgelenkbaugruppe gekoppelte Roboterarme sowie einen mit der Drehgelenkbaugruppe koppelbaren oder gekoppelten Greifer. Aus den vorstehend geschilderten Gründen bietet ein solcher Roboter technische Vorteile gegenüber herkömmlichen Robotern. Insbesondere werden ein schnelleres An- und Abkoppeln des Greifers sowie eine bessere Bewegungsfähigkeit des Greifers am Roboter ermöglicht.

Vorzugsweise sind Komplementärstrukturen am Greifer im Eingriff mit Eingriffsstrukturen am Innenkörper, wenn der Greifer mit der Drehgelenkbaugruppe gekoppelt ist. Wie bereits vorstehend geschildert, ermöglichen die im Eingriff stehenden Komplementärstrukturen und Eingriffsstrukturen das Übertragen von Drehmoment vom Innenkörper auf den Greifer. Wenn in einer oder mehreren der Eingriffsstrukturen ein zweiter Fluidanschluss vorgesehen ist, wird außerdem eine Fluidverbindung zwischen Drehgelenkbaugruppe und Greifer ermöglicht.

Zweckmäßig ist es, wenn der Greifer ein Zentrier- und Verriegelungselement aufweist, dass vorzugsweise von der Achse weniger weit entfernt ist als die Komplementärstrukturen, d.h., dass entweder auf der Achse oder wenigstens dichter an der Achse liegt als die Komplementärstrukturen. Durch die weiter außenliegenden Komplementärstrukturen vergrößert sich der Hebelarm am Ort der Komplementärstrukturen. Dies vergrößert die auf den Greifer übertragenen Drehmomente.

In einem dritten Aspekt bezieht sich die Erfindung auf eine Verpackungsanlage mit einem Roboter in einer der vorstehend geschilderten Ausführungsformen. Die Verpackungsanlage kann eine Verpackungsmaschine aufweisen, mit der Verpackungen mit Stückgütern gefüllt und anschließend verschlossen werden, bspw. durch gasdichtes Versiegeln der Verpackungen mit einer Oberfolie. Der Roboter kann dazu vorgesehen sein, Stückgüter aufzunehmen, bspw. von einer Fördervorrichtung wie einem Förderband, und sie entweder auf eine weitere Fördervorrichtung oder aber direkt in die Verpackungen umzusetzen.

Im Folgenden werden vorteilhafte Ausführungsformen der Erfindung anhand einer Zeichnung näher erläutert. Im Einzelnen zeigen:
- Figur 1: ein Ausführungsbeispiel eines Delta-Roboters mit einem an die Drehgelenkbaugruppe gekoppelten Greifer,
- Figur 2: eine Seitenansicht des in Figur 1 gezeigten Roboters,
- Figur 3: eine perspektivische Ansicht des in Figur 1 gezeigten Roboters nach dem Abkoppeln des Greifers,
- Figur 4: eine Seitenansicht der Drehgelenkbaugruppe mit angebrachten Roboterarmen,
- Figur 5: eine perspektivische Ansicht eines Ausführungsbeispiels der Drehgelenkbaugruppe,
- Figur 6: einen Vertikalschnitt durch die in Figur 5 gezeigte Drehgelenkbaugruppe,
- Figur 7: eine perspektivische Ansicht einer Ausführungsform des Innenkörpers,
- Figur 8: verschiedene Varianten eines Querschnitts durch den Innenkörper,
- Figur 9: eine perspektivische Ansicht der Drehgelenkbaugruppe von unten,
- Figur 10: eine perspektivische Ansicht eines Ausführungsbeispiels des Greifers,
- Figur 11: eine perspektivische Ansicht der Kupplung zwischen Drehgelenkbaugruppe und Greifer in Freigabeposition,
- Figur 12: eine perspektivische Ansicht der Kupplung zwischen Greifer und Drehgelenkbaugruppe in Verriegelungsposition.

Gleiche Komponenten sind in den Figuren durchgängig mit gleichem Bezugszeichen versehen.

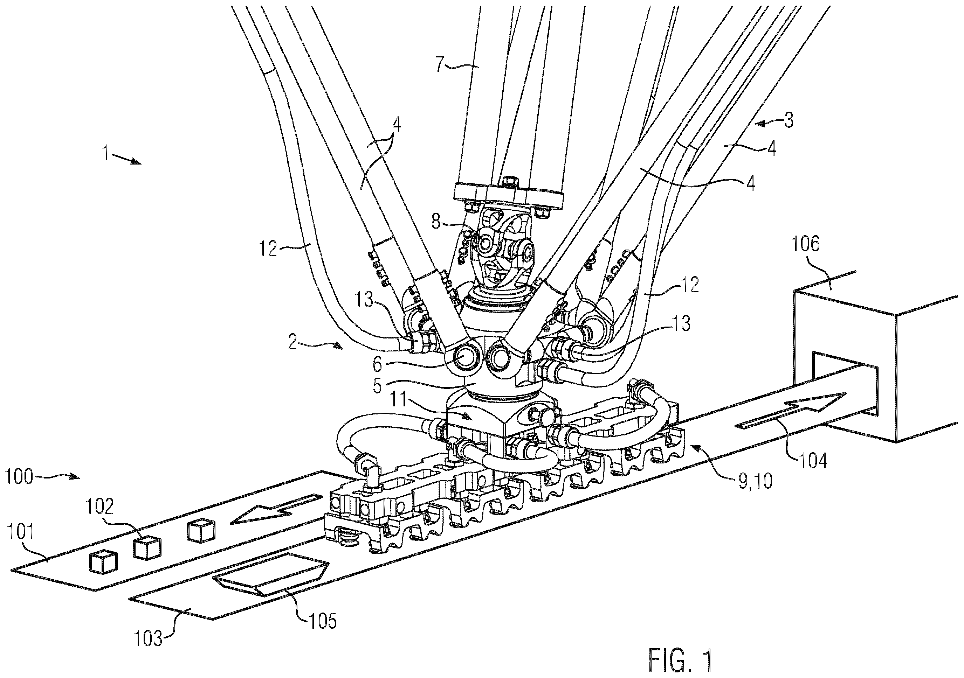

Figur 1 zeigt in perspektivischer Ansicht ein Ausführungsbeispiel eines Roboters 1, hier konkret eines Delta-Roboters. Der Roboter 1 weist als zentrales Element eine Drehgelenkbaugruppe 2 auf. Die Drehgelenkbaugruppe 2 bildet die zentrale Arbeitsplattform des Roboters 1, auch als TCP (Tool Center Point) bezeichnet. An die Drehgelenkbaugruppe 2 sind drei Roboterarme 3 angekoppelt. Jeder Roboterarm 3 umfasst dabei zwei parallel zueinander ausgerichtete Stangen 4. Die Drehgelenkbaugruppe 2 umfasst einen Außenkörper 5. Jede Stange 4 ist über eine Gelenkstruktur 6, bspw. ein Kugelgelenk, mit dem Außenkörper 5 gelenkig verbunden.

Zwischen den drei Roboterarmen 3 befindet sich ein Rotor-Doppelarm 7. Mittels eines Kardangelenks 8 ist der Rotor-Doppelarm 7 an die Drehgelenkbaugruppe 7 angeschlossen. Drehungen des Rotor-Doppelarms 7, die von einem (nicht gezeigten) Drehantrieb erzeugt werden, werden über das Kardangelenk 8 und durch die Drehgelenkbaugruppe 2 hindurch auf ein Werkzeug 9 übertragen, um dieses Werkzeug 9 relativ zum Außenkörper 5 der Drehgelenkbaugruppe 2 zu drehen. Im vorliegenden Ausführungsbeispiel handelt es sich beim Werkzeug 9 konkret um einen Greifer 10. Der Greifer 10 ist mittels einer Kupplung 11 an die Drehgelenkbaugruppe 2 angekoppelt. Die nachfolgend noch genauer beschriebene Kupplung 11 ist werkzeuglos bedienbar. Im vorliegenden Ausführungsbeispiel ist sie konkret als Schnellkupplung ausgebildet.

Entlang der Roboterarme 3, abschnittsweise auch zwischen den Stangen 4 der Roboterarme 3, führen Schläuche 12 an die Drehgelenkbaugruppe 2 heran. Die Schläuche 12 können Fluid wie bspw. Luft (insbesondere beim Evakuieren), Druckluft, bestimmte Gase oder Reinigungsfluid führen. Jeder Schlauch 12 ist über einen ersten Fluidanschluss an den Außenkörper 5 der Drehgelenkbaugruppe 2 angeschlossen. Einer der ersten Fluidanschlüsse 13 befindet sich bspw. zwischen zwei Gelenkstrukturen, an denen die zueinander parallelen Gelenkstangen 4 eines Roboterarms 3 an die Drehgelenkbaugruppe 2 angeschlossen sind. Der erste Fluidanschluss 13 kann sich auf derselben Höhe befinden wie die Gelenkstrukturen 6.

Von den ersten Fluidanschlüssen 13 besteht eine Fluidverbindung durch die Drehgelenkbaugruppe 2 hindurch zu dem mit ihr gekoppelten Werkzeug 9, hier also konkret zu dem Greifer 10. Wie bereits einleitend geschildert, hat das Hindurchführen der Fluide durch die Drehgelenkbaugruppe 2 des Roboters 1 den Vorteil, dass eine Schlauchverbindung zwischen dem oberen Teil des Roboters 1 und dem Werkzeug 9 entfallen kann. Dies wiederum hat z.B. den Vorteil, dass solche Schlauchverbindungen, wie sie bisher üblich waren, eine Drehbewegung des Werkzeugs 9 nicht länger behindern, sodass prinzipiell unbegrenzt große Drehbewegungen des Werkzeugs 9 relativ zum Außenkörper 5 der Drehgelenkbaugruppe 2 ermöglicht werden.

Figur 1 zeigt schematisch, dass der Delta-Roboter Teil einer Verpackungsanlage 100 ist. Die Verpackungsanlage 100 umfasst beispielhaft einen ersten Förderer 101, bspw. ein Förderer, auf dem Produkte 102 transportiert werden. Auf einem hier beispielhaft parallel zum ersten Förderer 101 angeordneten zweiten Förderer 103 werden in einer Transportrichtung 104 Verpackungsschalen 105 transportiert. Der Roboter 1 ist dazu konfiguriert und programmiert, mit seinem Greifer 10 Produkte 102 vom ersten Förderer 101 aufzunehmen und in die Verpackungsschalen 105 auf dem zweiten Förderer einzusetzen. Die mit dem Produkt 102 gefüllten Verpackungsschalen 105 werden anschließend in Transportrichtung 104 in eine Verpackungsmaschine 106 der Verpackungsanlage 100 transportiert und dort verschlossen.

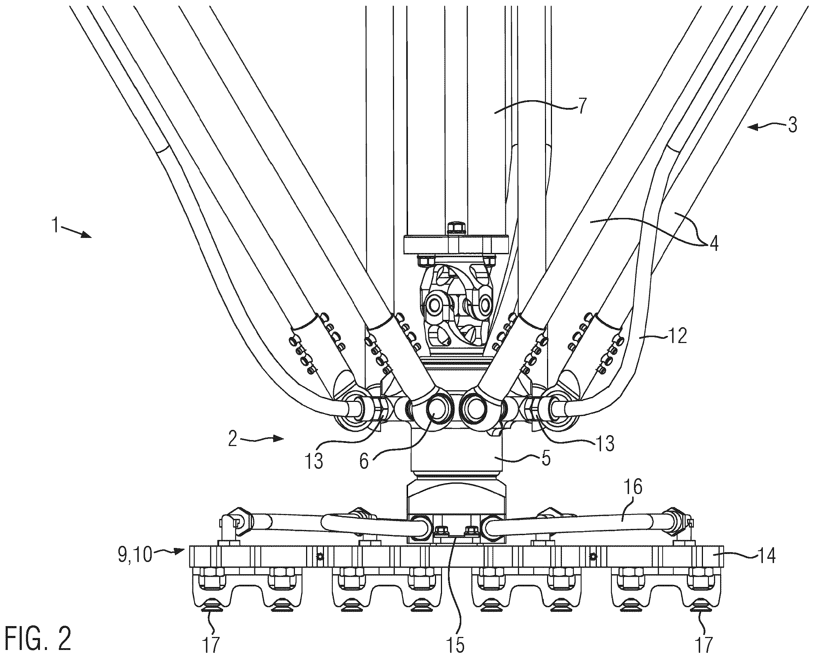

Figur 2 zeigt den Roboter 1 in einer Seitenansicht. Genau wie in Figur 1 ist auch hier der Greifer 10 an die Drehgelenkbaugruppe 2 angekoppelt.

Der Greifer 10 umfasst einen Hauptkörper 14, hier beispielhaft in Form einer Platte. Mittig auf dem Hauptkörper 14 befindet sich ein Anschlussstück 15. Es dient zum Ankoppeln des Greifers 10 an die Drehgelenkbaugruppe 2. Vom Anschlussstück 15 aus erstrecken sich Verteilerleitungen 16, die eine Fluidverbindung vom Anschlussstück 15 zu einem jeweiligen Aktor 17 am Greifer 10 bilden. Im vorliegenden Ausführungsbeispiel sind als Aktoren 17 mehrere Sauggreif-Aktoren am Greifer 10 vorgesehen.

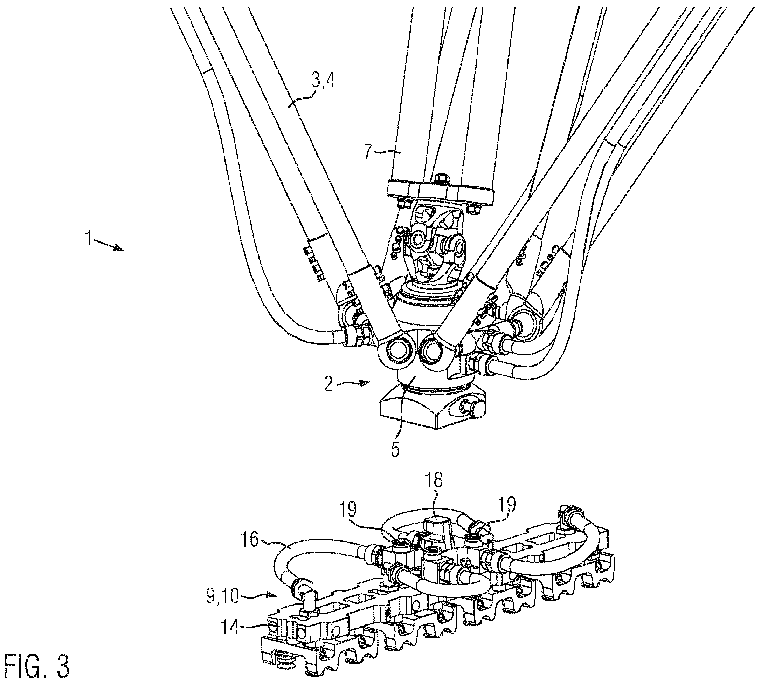

Figur 3 zeigt eine perspektivische Ansicht des Roboters 1 in einem Zustand, in dem der Greifer 10 von der Drehgelenkbaugruppe 2 getrennt oder abgekoppelt ist. Aus Figur 3 ist ersichtlich, welche Komponenten bei diesem Abkoppeln am oberen Teil des Roboters 1 verbleiben (bzw. an der Drehgelenkbaugruppe 2) und welche Teile am Greifer 10 verbleiben. Zu erkennen ist auch, dass der Greifer 10 über ein Zentrier- und Verriegelungselement 18 verfügt. Das Zentrier- und Verriegelungselement 18 ist zentral oberhalb des Massenschwerpunkts des Greifers 10 angeordnet. Beim Ankoppeln des Greifers 10 an die Drehgelenkbaugruppe 2 dient es zum Zentrieren und zum Verriegeln des Greifers 10 an der Drehgelenkbaugruppe 2. Zu erkennen ist außerdem, dass um das Zentrier- und Verriegelungselement 18 herum mehrere (im vorliegenden Ausführungsbeispiel: vier) Komplementärstrukturen 19 vorgesehen sind. Die Komplementärstrukturen 19 sind im vorliegenden Ausführungsbeispiel als Vorsprünge ausgebildet. Durch einen Eingriff mit ihnen entsprechenden Eingriffsstrukturen an der Drehgelenkbaugruppe 2 bieten die Komplementärstrukturen 19 die Möglichkeit zum Übertragen eines durch den Rotor-Doppelarm 7 eingeleiteten Drehmoments auf den Greifer 10. Zudem dienen die Komplementärstrukturen im vorliegenden Ausführungsbeispiel als Anschlüsse für die Fluidleitungen an den Greifer 10.

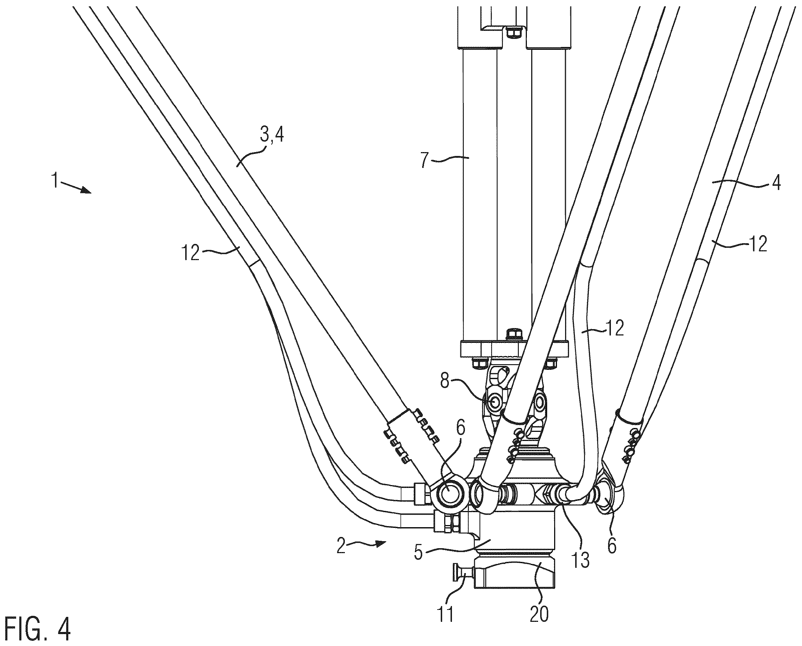

Figur 4 zeigt eine Seitenansicht auf den oberen Teil des Roboters 1 ohne den Greifer 10. Neben dem Außenkörper 5 umfasst die Drehgelenkbaugruppe 2 auch einen Innenkörper 20. Vom Innenkörper 20 ist hier der untere, aus dem Außenkörper 5 hervorstehende Abschnitt zu erkennen. An diesem Abschnitt des Innenkörpers 20 befindet sich die Kupplung 11 zum Ankoppeln des Greifers 10.

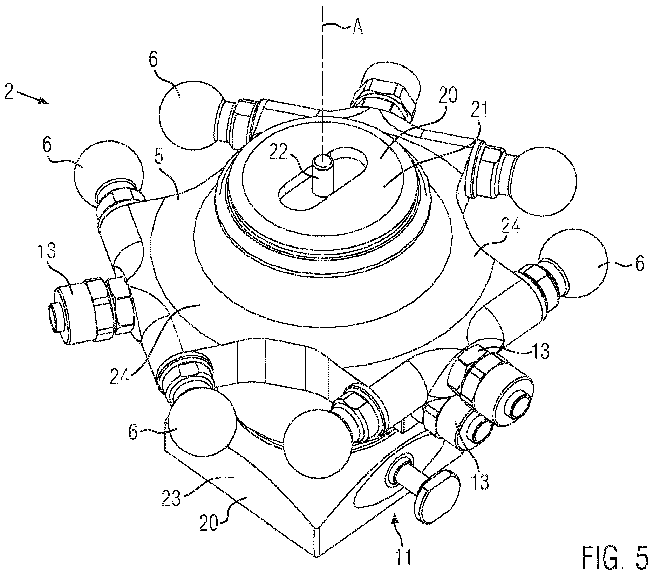

Figur 5 zeigt die Drehgelenkbaugruppe 2 in perspektivischer Ansicht von oben. Der Innenkörper 20 umfasst einen im Wesentlichen zylindrischen Teil 21, der im Außenkörper 5 aufgenommen ist und dessen Oberseite in Figur 5 sichtbar ist. Aus einer Öffnung im zylindrischen Teil 21 ragt ein Stift 22 heraus, mittels dessen das Kardangelenk 8 mit dem Innenkörper 2 verbunden werden kann. Wenn das Kardangelenk 8 mit dem Innenkörper 2 verbunden ist, kann der Innenkörper 20 um eine Achse A relativ zum Außenkörper 5 gedreht werden. Bei der Achse A kann es sich um die Mittelachse des zylindrischen Teils 21 des Innenkörpers 20 handeln. Unterhalb des Außenkörpers 5 ragt ein im Wesentlichen blockförmiger Teil 23 des Innenkörpers 20 aus dem Außenkörper 5 heraus. Der blockförmige Teil 23 enthält die Kupplung 11 zum Ankoppeln des Greifers 10.

Der Außenkörper 5 ist im Wesentlichen einstückig ausgebildet, bspw. aus einem Metall, z.B. Edelstahl oder Aluminium. Äquidistant über seinen Umfang verteilt, befinden sich am Außenkörper 5 drei Flanschabschnitte 24. Wenn die Achse A vertikal ausgerichtet ist, stehen die Flanschabschnitte 24 horizontal nach außen vom Außenkörper 5 ab. An seinen beiden äußeren Enden trägt jeder Flanschabschnitt 24 eine Gelenkstruktur 6, bspw. eine Kugel für ein Kugelgelenk. Die Gelenkstrukturen 6 dienen zum Anbinden der Stangen 4 der Roboterarme 3. Die beiden Stangen 4 eines Roboterarms 3 sind jeweils an die Gelenkstrukturen 6 desselben Flanschabschnitts 24 anzubringen. Seitlich nach außen ragend, befinden sich am Außenkörper 5 ferner mehrere erste Fluidanschlüsse 13. Im vorliegenden Ausführungsbeispiel sind vier erste Fluidanschlüsse 13 zu erkennen. Dabei befinden sich drei dieser ersten Fluidanschlüsse 13 jeweils außen an einem Flanschabschnitt 24, und zwar mittig zwischen den beiden Gelenkstrukturen 6 an den äußeren Enden des jeweiligen Flanschabschnitts 24.

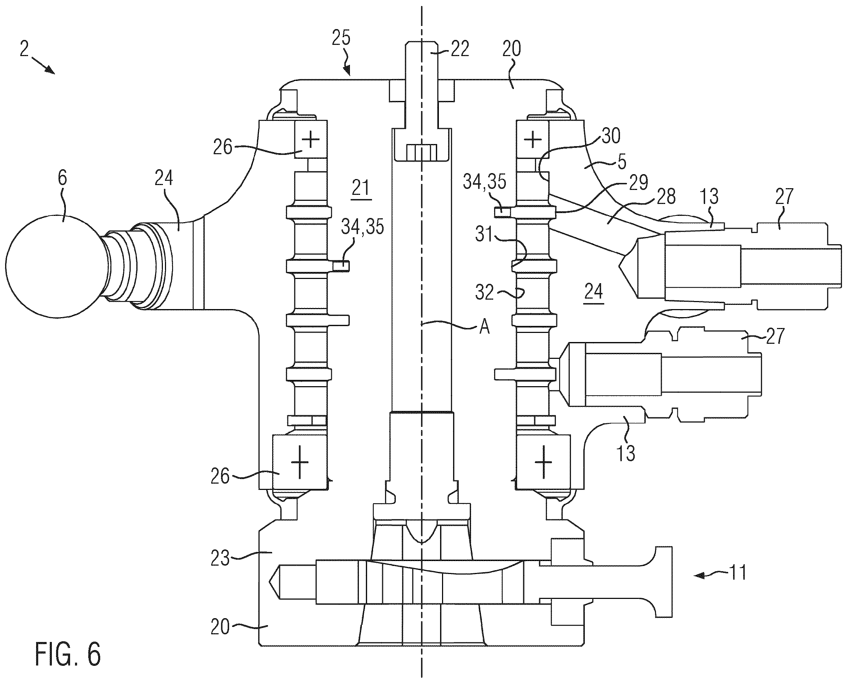

Figur 6 zeigt einen Vertikalschnitt durch die Drehgelenkbaugruppe 2. Zu erkennen ist, dass der Außenkörper 5 einen im Wesentlichen zylindrischen Hohlraum 25 aufweist, in welchem der zylindrische Teil 21 des Innenkörpers 20 aufgenommen ist. Die Achse A bildet die Mittelachse des im Wesentlichen zylindrischen Hohlraums 25. Ringdichtungen 26 dichten den Innenkörper 20 gegen den Außenkörper 5 ab.

An jedem ersten Fluidanschluss 13 befindet sich ein Einsatz 27, über den außen ein Schlauch 12 angeschlossen werden kann. Von jedem ersten Fluidanschluss 13 führt eine Fluidleitung 28 durch die Drehgelenkbaugruppe 2 hindurch und durchsetzt dabei den Außenkörper 5 und den Innenkörper 20. Im dargestellten Ausführungsbeispiel führt die Fluidleitung 28 vom ersten Fluidanschluss 13 zunächst zu einer Ringnut 29 an einer Innenfläche 30 des Hohlraums 25. Die Ringnut 29 kann sich entweder nur abschnittsweise über einen Teil des Umfangs der Innenfläche 30 erstrecken, oder aber über einen Vollkreis von 360° um die Innenfläche 30 herum. Sie sorgt dafür, dass die Fluidleitung 28 über den entsprechenden Winkelbereich der Ringnut 29 zum Innenkörper 20 hin freiliegt. Zusätzlich oder alternativ zur Ringnut 29 kann analog eine Ringnut 31 an einer Außenfläche 32 des Innenkörpers 20 vorgesehen sein.

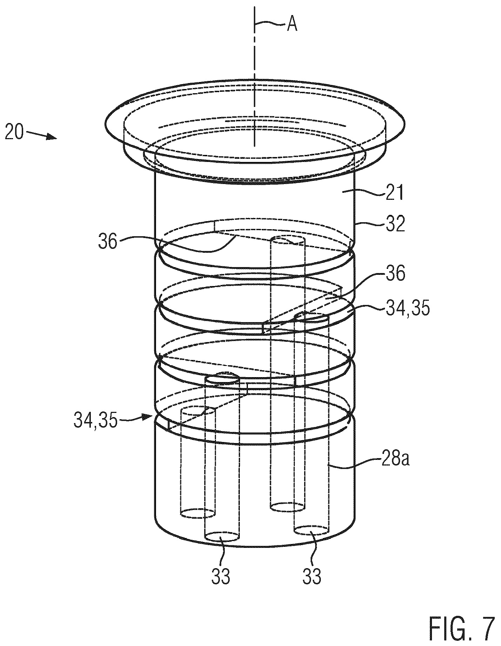

Figur 7 zeigt in perspektivischer Ansicht den zylindrischen Teil 21 des Innenkörpers 20. Jede die Drehgelenkbaugruppe 2 durchsetzende Fluidleitung 28 umfasst einen axialen Abschnitt 28a, der sich im Innenkörper 20 parallel zu dessen Längsachse A erstreckt. Da es im vorliegenden Ausführungsbeispiel vier Fluidleitungen 28 mit vier ersten Fluidanschlüssen 13 am Außenkörper gibt, gibt es im Innenkörper entsprechend auch vier axiale Abschnitte 28a. Denkbar wäre es alternativ, dass die Drehgelenkbaugruppe 2 auch nur eine, oder aber zwei, drei, fünf oder sechs Fluidleitungen 28 aufweist.

In Draufsicht sind die axialen Abschnitte 28a der Fluidleitungen 28 äquidistant verteilt, d.h. jeweils in einem Winkelabstand von 90° zueinander. Am unteren Ende enden die axialen Abschnitte 28a jeweils in einem zweiten Fluidanschluss 33 am Innenkörper 20. Die zweiten Fluidanschlüsse 33 dienen dazu, die Fluidleitungen 28 in das Werkzeug 9 bzw. den Greifer 10 fortzuführen.

In Axialrichtung des Innenkörpers 20 sind die axialen Abschnitte 28a unterschiedlich lang, d.h. sie erstrecken sich bis in unterschiedliche Höhen entlang der Achse A. An seinem oberen Ende ist jeder axiale Abschnitt 28a einer Fluidleitung 28 fluidverbunden mit einer Einkerbung 34, die sich im Wesentlichen radial bis zur Außenfläche 32 des Innenkörpers 20 erstreckt, um dort die Fluidverbindung zum Abschnitt der zugeordneten Fluidleitung 28 im Außenkörper 5 zu ermöglichen. Im vorliegenden Ausführungsbeispiel sind die Einkerbungen 34 jeweils als Einschnitte 35 mit konstanter Höhe ausgebildet, d.h. in Radialrichtung des Innenkörpers 20 bleibt die Höhe der Einkerbung 34 konstant. Die Einschnitte 35 enden jeweils an einer Innenkante 36, die eine Sekante an dem hier kreisförmigen Querschnitt des Innenkörpers 20 bildet. Wie bspw. im Vertikalschnitt in Figur 6 zu erkennen ist, haben die Einschnitte 35 den Vorteil, in Axialrichtung des Innenkörpers 20 besonders wenig Platz zu benötigen. Damit können auf dichtem Raum nebeneinander vergleichsweise viele Fluidleitungen 28 über die Außenfläche 32 des Innenkörpers 20 geführt werden. Alternativ zur Ausbildung als Einschnitt 35 könnten die Einkerbungen 34 auch als Kerbe mit einem sich nach außen hin erweiternden Querschnitt (d.h. zunehmender Höhe in Radialrichtung des Innenkörpers) ausgebildet sein.

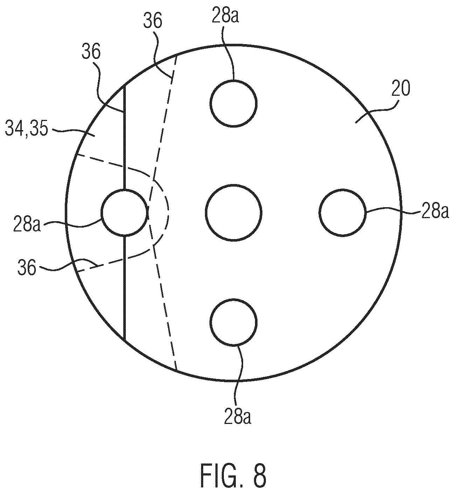

Figur 8 zeigt einen Horizontalschnitt durch den Innenkörper 20. Zu erkennen ist, dass die vier axialen Fluidleitungsabschnitte 28a äquidistant im Abstand von jeweils 360°/n = 90° voneinander angeordnet sind. Die in Figur 7 gezeigte Ausführungsform mit einer Innenkante 36 der Einkerbung 34 bzw. des Einschnitts 35, bei der die Innenkante 36 in Form einer Sekante verläuft, ist mit einer durchgezogenen Linie dargestellt. Lediglich beispielhaft sind mit gestrichelten Linien alternative Formen der Innenkante 36 dargestellt, bspw. ein dachförmiger oder V-förmiger Verlauf sowie ein Verlauf der Innenkante 36 entlang einer Parabel oder eines Kreisbogens.

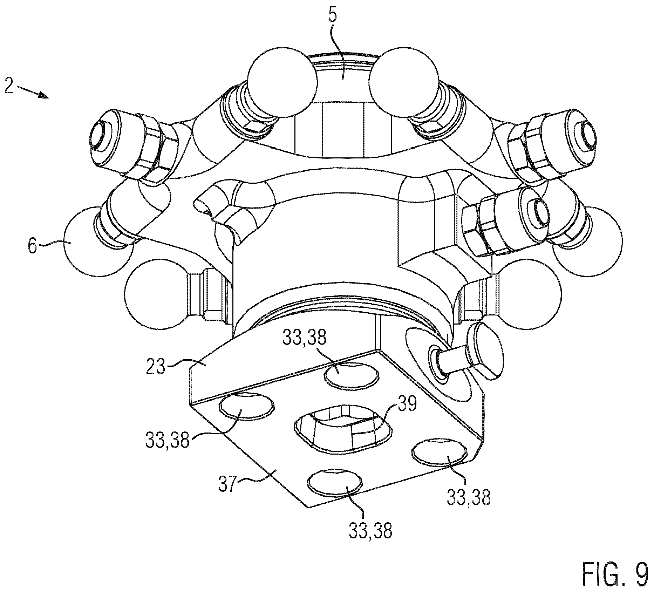

Figur 9 zeigt eine perspektivische Ansicht der Drehgelenkbaugruppe 2 von unten. Besonders gut zu erkennen sind hier die zweiten Fluidanschlüsse 33, die an einer Unterseite 37 des blockförmigen Teils 23 des Innenteils 20 ausgebildet sind. Die zweiten Fluidanschlüsse 33 sind dabei jeweils in einer Eingriffsstruktur 38 ausgebildet, die hier als kreisförmige Vertiefung in der Unterseite 37 vorgesehen ist. Die Eingriffsstrukturen 38 sind so geformt und angeordnet, dass sie jeweils die Komplementärstrukturen 19 am Werkzeug bzw. Greifer 9, 10 aufnehmen können. Darüber hinaus verfügt der Innenkörper 20 über eine mittig angeordnete Zentrieröffnung 39, in der das Zentrier- und Verriegelungselement 18 aufnehmbar ist.

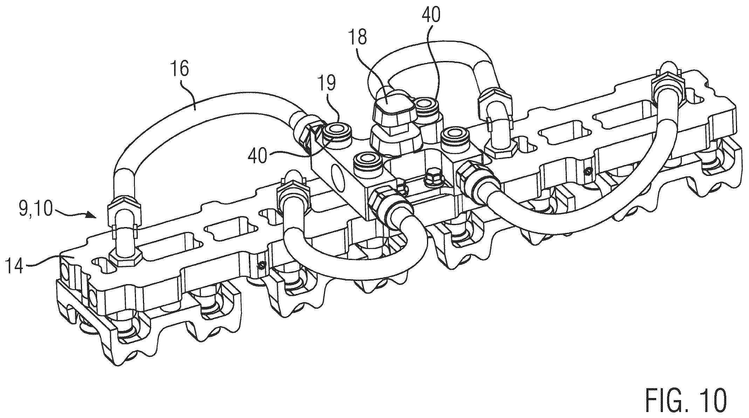

Figur 10 zeigt eine perspektivische Ansicht des Greifers 10. Mittig befindet sich das beispielhaft im Wesentlichen pilzförmige Zentrier- und Verriegelungselement 18. Exzentrisch darum verteilt liegen die vier Komplementärstrukturen 19. An der Außenseite jeder Komplementärstruktur 19 befindet sich jeweils eine Ringdichtung 40, damit eine Fluidverbindung zwischen Drehgelenkbaugruppe 2 und Werkzeug bzw. Greifer 9, 10 fluiddicht wird.

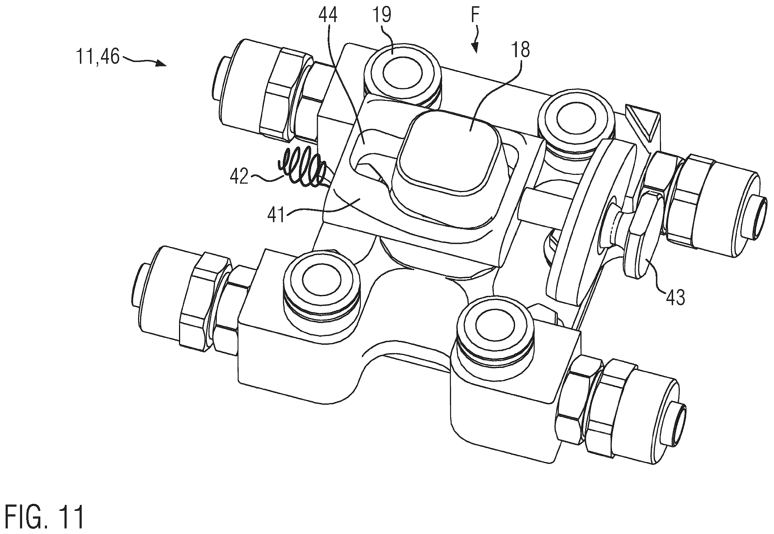

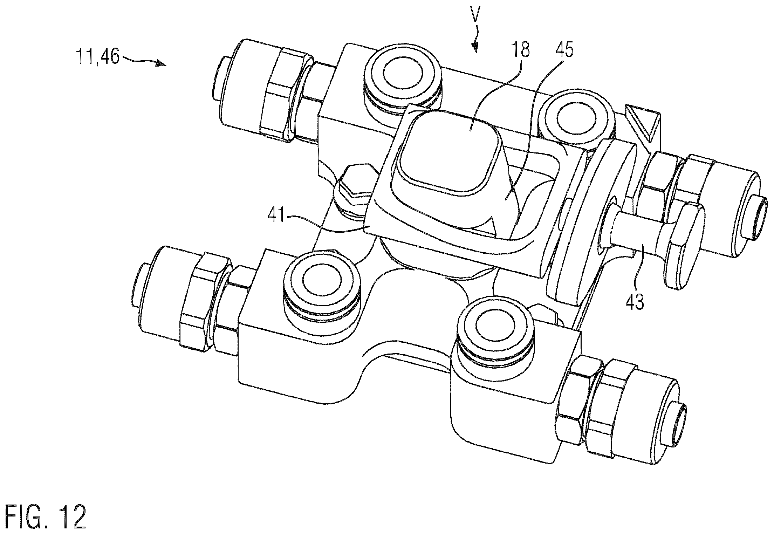

Figur 11 zeigt in perspektivischer Ansicht ein Ausführungsbeispiel der Kupplung 11 zwischen Drehgelenkbaugruppe 2 und Greifer 10. Im Inneren des blockförmigen Teils 23 des Innenkörpers 2 befindet sich ein Verriegelungsglied 41. Das Verriegelungsglied 41 ist im Innenkörper 20 verschiebbar geführt zwischen einer in Figur 11 gezeigten Freigabeposition F und einer in Figur 12 gezeigten Verriegelungsposition V. Durch ein Vorspannelement 42, bspw. die in Figur 11 angedeutete Druckfeder 42, ist das Verriegelungsglied 41 vorgespannt in seine Verriegelungsposition. Das Verriegelungsglied 41 verfügt über ein Bedienelement 43 oder ist mit einem solchen Bedienelement 43 verbunden. Das Bedienelement 43 ist als ein Stift mit einem sich verbreiternden Kopf ausgebildet, kann jedoch auch beliebige andere Formen haben.

Das Verriegelungsglied 41 hat eine schlüssellochförmige Aussparung 44 mit einem breiten und einem schmalen Abschnitt. Der breite Abschnitt ist so groß, dass er vom Kopf des pilzförmigen Zentrier- und Verriegelungselements 18 durchdrungen werden kann, wenn der Greifer 10 an die Drehgelenkbaugruppe 2 angekoppelt wird. Wenn das Verriegelungsglied 41 sich in die in Figur 12 gezeigte Verriegelungsposition V bewegt, befindet sich schließlich der schmalere Bereich der Aussparung 44 an einem schmaleren Hals 45 des Zentrier- und Verriegelungselement 18, sodass sich dieses nicht mehr aus der Kupplung 11 lösen lässt. Zum Lösen der Verriegelung kann der Bediener das Bedienelement 43 betätigen, um das Verriegelungsglied 41 entgegen der Kraft des Vorspannelements 42 in die Freigabeposition (Figur 11) zu verschieben. Anschließend kann der Greifer 10 entfernt werden. In der dargestellten Ausführungsform ist die Kupplung als Schnellverschluss 46 ausgebildet, der werkzeuglos bedienbar ist.

Ausgehend von den dargestellten Ausführungsbeispielen können die Drehgelenkbaugruppe 2 und der Roboter 1 sowie die Verpackungsanlage 100 in vielfacher Hinsicht abgewandelt werden. Bspw. muss als Werkzeug 9 kein Greifer 10 verwendet werden. Wie bereits erläutert, kann die Kupplung 11 anders ausgebildet sein, bspw. als ein Bajonettverschluss. Wie ebenfalls bereits erwähnt, können bspw. eine bis sechs Fluidleitungen 28 vorgesehen sein und es sind auch Ausführungsformen mit mehr Fluidleitungen 28 denkbar. Fluidleitungen 28 könnten sich innerhalb der Drehgelenkbaugruppe 2 verzweigen, so dass bspw. von einem ersten Fluidanschluss 13 eine Fluidleitung 28 zu mehreren zweiten Fluidanschlüssen 33 führt.

## Patentansprüche

1. Drehgelenkbaugruppe (2) für einen Roboter (1), wobei die Drehgelenkbaugruppe (2) einen Außenkörper (5) mit einem Hohlraum (25) sowie einen abschnittsweise in dem Hohlraum (25) aufgenommenen Innenkörper (20) aufweist, wobei der Innenkörper (20) um eine Achse (A) relativ zum Außenkörper (5) rotierbar ist, **dadurch gekennzeichnet, dass** am Außenkörper (5) ein oder mehrere erste Fluidanschlüsse (13) vorhanden sind, dass am Außenkörper (5) eine Gelenkstruktur (6) zum Ankoppeln von einem oder mehreren Roboterarmen (3) vorhanden ist,
dass der Innenkörper (20) eine Kupplung (11) zum Ankoppeln eines Greifers (10) aufweist,
dass am Innenkörper (20) ein oder mehrere zweite Fluidanschlüsse (33) vorhanden sind, und dass jeder erste Fluidanschluss (13) über eine den Außenkörper (5) und/oder den Innenkörper (20) durchsetzende Fluidleitung (28) fluidverbunden ist mit einem zugeordneten zweiten Fluidanschluss (33) am Innenkörper (20).

2. Drehgelenkbaugruppe nach Anspruch 1, **dadurch gekennzeichnet, dass** der Außenkörper (5) einstückig geformt ist.

3. Drehgelenkbaugruppe nach einem der vorangehenden Ansprüche, **dadurch gekennzeichnet, dass** der Außenkörper (5) mindestens einen, vorzugsweise drei, Flanschabschnitte (24) aufweist, wobei vorzugsweise an dem einen oder an jedem Flanschabschnitt (24) zwei Gelenkstrukturen (6) zum Ankoppeln jeweils einer Stange (4) eines Roboterarms (3) vorgesehen sind.

4. Drehgelenkbaugruppe nach Anspruch 3, **dadurch gekennzeichnet, dass** an dem Flanschabschnitt (24) zwischen den zwei Gelenkstrukturen (6) ein erster Fluidanschluss (13) angeordnet ist.

5. Drehgelenkbaugruppe nach einem der vorangehenden Ansprüche, **dadurch gekennzeichnet, dass** zwei, drei, vier, fünf oder sechs erste Fluidanschlüsse (13) am Außenkörper (5) sowie jeweils zugeordnete Fluidleitungen (28) vorgesehen sind.

6. Drehgelenkbaugruppe nach einem der vorangehenden Ansprüche, **dadurch gekennzeichnet, dass** am Innenkörper (20) eine oder mehrere exzentrisch zur Achse (A) angeordnete Eingriffsstruktur(en) (38) vorgesehen sind, die konfiguriert sind zum Eingriff mit Komplementärstrukturen (19) am Greifer (10), wenn der Greifer (10) an den Innenkörper (20) angekoppelt ist.

7. Drehgelenkbaugruppe nach Anspruch 6, **dadurch gekennzeichnet, dass** in mindestens einer Eingriffsstruktur (38) ein zweiter Fluidanschluss (33) vorgesehen ist.

8. Drehgelenkbaugruppe nach einem der vorangehenden Ansprüche, **dadurch gekennzeichnet, dass** die Kupplung (11) zum Ankoppeln eines Greifers (10) ein Bajonettverschluss oder ein Schnellverschluss (46) ist.

9. Drehgelenkbaugruppe nach einem der vorangehenden Ansprüche, **dadurch gekennzeichnet, dass** die Kupplung (11) zum Ankoppeln eines Greifers (10) ein in eine Verriegelungsposition (V) vorgespanntes Verriegelungsglied (41) aufweist.

10. Drehgelenkbaugruppe nach einem der vorangehenden Ansprüche, **dadurch gekennzeichnet, dass** eine Fluidleitung (28) eine Ringnut (29,31) umfasst, die an einer Innenfläche (30) des Hohlraums (25) und/oder an einer Außenfläche (32) des Innenkörpers (20) vorgesehen ist.

11. Drehgelenkbaugruppe nach einem der vorangehenden Ansprüche, **dadurch gekennzeichnet, dass** der Innenkörper (20) als Teil einer Fluidleitung (28) eine Einkerbung (34) aufweist, wobei die Einkerbung (34) vorzugsweise eine Innenkante (36) aufweist, die sich entlang einer Sekante eines Querschnitts des Innenkörpers (20) erstreckt.

12. Roboter (1) mit einer Drehgelenkbaugruppe (2) nach einem der vorangehenden Ansprüche, ferner umfassend mit der Drehgelenkbaugruppe (2) gekoppelte Roboterarme (3) sowie einen mit der Drehgelenkbaugruppe (2) koppelbaren oder gekoppelten Greifer (10).

13. Roboter nach Anspruch 12, wobei Komplementärstrukturen (19) am Greifer (10) im Eingriff sind mit Eingriffsstrukturen (38) am Innenkörper (20).

14. Roboter nach Anspruch 12 oder 13, wobei der Greifer (10) ein Zentrier- und Verriegelungselement (18) aufweist, das vorzugsweise von der Achse (A) weniger weit entfernt ist als die Komplementärstrukturen (19).

15. Verpackungsanlage (100) mit einem Roboter (1) nach einem der Ansprüche 12 bis 14.
